# EUROPEAN PATENT APPLICATION

(11) **EP 4 527 264 A1**
(43) Date of publication of application: **26.03.2025**
(21) Application number: 24168900.9
(22) Date of filing: 08.04.2024
(51) Int. Cl.: A47J 31/46, A47J 31/60

(54) **ANTI-RESIDUE DEVICE, BEVERAGE PREPARATION METHOD AND ELECTRICAL EQUIPMENT**

(30) Priority: 22.09.2023 CN 202311236714
(71) Applicant: Guangdong Midea Consumer Electrics Manufacturing Co. Ltd., Foshan, Guangdong 528311 (CN)
(72) Inventor: ZHAO, Jinzhang, Foshan (CN); LI, Tianlong, Foshan (CN); SITU, Weifeng, Foshan (CN); WU, Weiping, Foshan (CN)
(74) Representative: Ran, Handong

(57) **Abstract**

The present application relates to an anti-residue device, a beverage preparation method and an electrical equipment. The anti-residue device includes a brewing warehouse (100), a brewing piece (200), a brewing port (102) and a guiding piece (500). The brewing warehouse (100) is provided with a brewing chamber (101), and the brewing chamber (101) is provided with a brewing port (102). The brewing piece (200) movably passes through the brewing port (102), and the brewing piece (200) moves back and forth relative to the brewing warehouse (100). The brewing piece (200) is provided with a first guiding channel (300) and a second guiding channel (400), and both the first guiding channel (300) and the second guiding channel (400) communicate with the brewing chamber (101). The guiding piece (500) communicates with the first guiding channel (300) and the second guiding channel (400) to transport fluid.

## Description

### TECHNICAL FIELD

The present application relates to the technical field of domestic appliances, and in particular to an anti-residue device, a beverage preparation method and an electrical equipment.

### BACKGROUND

In the existing beverage preparation equipment, after the beverage is prepared, a certain amount of fluid will remain in the guiding piece between the brewing chamber and the beverage outlet. The residual fluid cannot be discharged from the beverage outlet by the equipment or cannot flow back to the brewing chamber. When the interval of the next brewing cycle is too long, the residual fluid will remain for a long time, resulting in a decline in fluid quality and affecting the user experience.

### SUMMARY

In order to solve the above objectives, the present application provides an anti-residue device, a beverage preparation method and an electrical equipment, to avoid the technical problem that the residual fluid in the guiding piece between the brewing chamber and the beverage outlet will remain for a long time, resulting in a decline in fluid quality and affecting the user experience.

The technical solution of the present application is as follows.

In a first aspect, the present application provides an anti-residue device including a brewing warehouse, a brewing piece and a guiding piece. The brewing warehouse is provided with a brewing chamber, and the brewing chamber is provided with a brewing port. The brewing piece movably passes through the brewing port, and the brewing piece moves back and forth relative to the brewing warehouse. The brewing piece is provided with a first guiding channel and a second guiding channel, and both the first guiding channel and the second guiding channel communicate with the brewing chamber. The guiding piece communicates with the first guiding channel and the second guiding channel to transport fluid. When the brewing piece and the brewing warehouse move towards each other, the first guiding channel is opened and the second guiding channel is closed, to guide fluid in the brewing warehouse to the guiding piece via the first guiding channel. When the brewing piece and the brewing warehouse move away from each other, the first guiding channel is closed and the second guiding channel is opened, to guide residual fluid in the first guiding channel and the guiding piece to the brewing warehouse via an opened second guiding channel, and the residual fluid is discharged via the brewing port.

In practical use of the anti-residue device in the embodiments of the present application, the brewing piece and the brewing warehouse are controlled to move towards each other. The first guiding channel is opened, and the second guiding channel is closed. The fluid in the brewing warehouse is guided to the corresponding equipment via the first guiding channel and the guiding piece, to prepare the beverage. After the fluid in the brewing warehouse is brewed, the brewing piece and the brewing warehouse are controlled to move away from each other, and a negative pressure is formed in the brewing warehouse. In this case, the first guiding channel is closed, and the second guiding channel is opened, to guide the fluid in the first guiding channel and the guiding piece to the brewing warehouse via the opened second guiding channel. Then the fluid will be discharged via the brewing port of the brewing warehouse, so that the residual fluid in the first guiding channel and the guiding piece can be discharged from the brewing warehouse, to avoid a decline in fluid quality due to long-term retention of the fluid, thereby improving user experience.

In some embodiments, a first switching piece is provided in the first guiding channel to control the first guiding channel to be open and closed; a second switching piece is provided in the second guiding channel to control the second guiding channel to be open and closed; and both the first switching piece and the second switching piece are pressure control valves.

In some embodiments, the first switching piece includes a first valve core and a first elastic piece, and the first valve core is movably provided in the first guiding channel. A head portion of the first valve core faces the brewing warehouse, and the head portion of the first valve core blocks the first guiding channel. A body of the first valve core is provided in the first guiding channel in a clearance fit, and a projection of the head portion of the first valve core falls on the body of the first valve core. Both ends of the first elastic piece are respectively connected to a tail portion of the first valve core and an inner wall of the first guiding channel. When the brewing piece and the brewing warehouse move towards each other, the fluid in the brewing warehouse is compressed and will flow into the first guiding channel, which will act on the head portion of the first valve core to force the first elastic piece to be compressed, so that the fluid can flow out via the gap between the body of the first valve core and the first guiding channel to open the first guiding channel. On the contrary, when the brewing piece and the brewing warehouse move away from each other, due to the negative pressure generated in the brewing warehouse, the first elastic piece is forced to drive the first valve core to return to close the first guiding channel.

In some embodiments, the first guiding channel includes a first liquid inlet channel and a first liquid diffusion channel provided along a movement direction of the brewing piece; the brewing chamber, the first liquid inlet channel, and the first liquid diffusion channel communicate with each other in sequence; a cross-sectional area of the first liquid diffusion channel gradually increases along a direction away from the brewing chamber; and a head portion of the first valve core is movably provided in the first liquid diffusion channel.

In some embodiments, the second switching piece includes a second valve core and a second elastic piece, and the second valve core is movably provided in the second guiding channel. A head portion of the second valve core departs away from the brewing warehouse, and a head portion of the second valve core blocks the second guiding channel. A whole of the second valve core is provided in the second guiding channel in a clearance fit, and a projection of the head portion of the second valve core falls on the body of the second valve core. Both ends of the second elastic piece are respectively connected to the tail portion of the first valve core and the inner wall of the first guiding channel. Under the condition that the brewing piece and the brewing warehouse move away from each other, the fluid in the brewing warehouse is compressed and will flow into the second guiding channel, which will act on the tail portion of the second valve core. The head portion of the second valve core blocks the second guiding channel, so that the fluid can only flow out via the first guiding channel, and at the same time, the second elastic piece is forced to extend to close the second guiding channel. On the contrary, under the condition that the brewing piece and the brewing warehouse move towards each other, due to the negative pressure generated in the brewing warehouse, the second elastic piece is forced to return, and the second elastic piece drives the second valve core to move to open the second guiding channel and guide the fluid in the guiding piece into the brewing warehouse via the opened second guiding channel, and then the fluid will be discharged via the brewing port of the brewing warehouse.

In some embodiments, the second guiding channel includes a second liquid inlet channel and a second liquid diffusion channel provided along the movement direction of the brewing piece; the second liquid inlet channel, the second liquid diffusion channel and the brewing chamber communicates with each other in sequence; a cross-sectional area of the second liquid diffusion channel gradually increases in a direction towards the brewing chamber; and a head portion of the second valve core is movably provided in the second liquid diffusion channel.

In some embodiments, the guiding piece includes a main pipe, a first branch pipe, and a second branch pipe. The main pipe is provided with a liquid inlet, and the first branch pipe and the second branch pipe are connected in parallel to the main pipe. The first branch pipe communicates with the first guiding channel, and the second branch pipe communicates with the second guiding channel.

In some embodiments, a top of the brewing piece is provided with a filter port, and a filter mesh is provided at the filter port.

In some embodiments, the anti-residue device further includes a piston piece movable back and forth in the brewing chamber, to receive residual fluid in the first guiding channel and the guiding piece and guide the residual fluid to the brewing port for discharging.

In a second aspect, the present application further provides a beverage preparation method based on the anti-residue device as mentioned above, and the beverage preparation method includes:
putting a brewing material into a brewing chamber of a brewing warehouse;
controlling the brewing warehouse and a brewing piece to move towards each other until the brewing piece closes a brewing port of the brewing warehouse;
injecting fluid into the brewing chamber;
controlling a piston piece to rise for compressing and extracting the fluid and the brewing material on the piston piece to form a beverage, and opening the first guiding channel to guide the beverage to a corresponding equipment via an opened first guiding channel;
controlling the piston piece to descend to generate a negative pressure in the brewing warehouse to close the first guiding channel and open the second guiding channel, a residual beverage falling onto the piston piece via an opened second guiding channel;
controlling the brewing warehouse and the brewing piece to move away from each other until the brewing port of the brewing chamber is open; and
controlling the piston piece to rise to a top of the brewing warehouse, the beverage being discharged from the brewing port of the brewing chamber.

In the beverage preparation method of the present application, the residual fluid in the guiding piece can be discharged from the brewing warehouse, to avoid the problem of fluid quality deterioration due to long-term retention of the residual fluid, thereby improving user experience.

In some embodiments, the controlling the brewing warehouse and the brewing piece to move towards each other includes controlling the brewing warehouse to move towards the brewing piece, and/or controlling the brewing piece to move towards the brewing warehouse.

In some embodiments, the controlling the brewing warehouse and the brewing piece to move away from each other includes controlling the brewing warehouse to move away from the brewing piece, and/or controlling the brewing piece to move away from the brewing warehouse.

In a third aspect, the present application further provides an electrical equipment including the anti-residue device as mentioned above.

For the electrical equipment with the anti-residue device as mentioned above, the residual fluid in the guiding piece can be discharged from the brewing warehouse, to avoid the problem of fluid quality deterioration due to long-term retention of the residual fluid, thereby improving user experience.

In some embodiments, the electrical equipment is an automatic coffee machine.

### BRIEF DESCRIPTION OF THE DRAWINGS

To illustrate the technical solutions according to the embodiments of the present application more clearly, the accompanying drawings for describing the embodiments are introduced briefly in the following. Apparently, the accompanying drawings in the following description are only some embodiments of the present application. Persons of ordinary skill in the art can derive other drawings from the accompanying drawings without creative efforts.
FIG. 1 is a schematic cross-sectional view of an anti-residue device according to one or more embodiments of the present application.
FIG. 2 is an explosion view of FIG. 1.
FIG. 3 is a schematic structural view of a brewing piece in FIG. 1.
FIG. 4 is a top view of FIG. 3.
FIG. 5 is a schematic cross-sectional view of FIG. 3 along line A-A.
FIG. 6 is a schematic structural view of a base in FIG. 3.
FIG. 7 is a schematic structural view of FIG. 6 from another perspective.
FIG. 8 is a schematic structural view of a guiding piece in FIG. 3.
FIG. 9 is a schematic flow chart of a beverage preparation method based on the anti-residue device.

Description of reference numbers:
brewing warehouse, 100; brewing chamber, 101; brewing port, 102;
brewing piece, 200; filter port, 201; filter mesh, 202; base, 203; first through hole, 204; second through hole, 205; first guiding column, 206; first guiding section, 207; second guiding section, 208; third guiding section, 209; second guiding column, 210; fourth guiding section, 211; fifth guiding section, 212; overlapping platform, 213; annular groove, 214; sealing piece, 215;
first guiding channel, 300; first liquid inlet channel, 301; first liquid diffusion channel, 302;
second guiding channel, 400; second liquid inlet channel, 401; second liquid diffusion channel, 402;
guiding piece, 500; main pipe, 501; first branch pipe, 502; second branch pipe, 503; joint, 504; liquid inlet, 505;
first switching piece, 600; first valve core, 601; first elastic piece, 602; first valve seat, 603; first positioning column, 604;
second switching piece, 700; second valve core, 701; second elastic piece, 702; second valve seat, 703; second positioning column, 704;
piston piece, 800.

### DETAILED DESCRIPTION OF THE EMBODIMENTS

The technical solutions of the embodiments of the present application will be described in detail below with reference to the accompanying drawings. It is obvious that the embodiments to be described are only some rather than all of the embodiments of the present application. All other embodiments obtained by persons skilled in the art based on the embodiments of the present application without creative efforts shall fall within the scope of the present application.

It should be noted that all the directional indications in the embodiments of the present application are only used to explain the relative positional relationship, movement, or the like of the components in a certain posture. If the specific posture changes, the directional indication will change accordingly.

Many different embodiments or examples are provides in the following for implementing different structures of the present application. To simplify the description of the present application, the components and arrangements in specific examples are described below. Of course, they are merely examples and are not intended to limit the present application. Furthermore, reference numbers and/or reference letters may be repeated in different examples of the present application, which is aimed at simplifying and clearing the description of the present application and does not indicate a relationship between various embodiments and/or arrangements. In addition, the present application provides examples of various specific processes and materials, but those skilled in the art can obtain application of other processes and/or use of other materials.

The present application is described below with reference to the accompanying drawings and embodiments.

In the related art, for the beverage preparation equipment, especially the pressure coffee machine, the coffee beans, the coffee powder or the coffee powder pack are usually putted into the brewing warehouse of the coffee preparation machine, and the fluid with a set temperature and a set pressure is injected into the brewing warehouse. After a certain amount of the coffee beverage is extracted, the equipment stops supplying. Then the brewing warehouse is opened automatically or manually, the residue in the brewing warehouse is discharged, and the next brewing cycle will be performed.

In the beverage preparation equipment on the market, after the beverage is prepared, a certain amount of coffee liquid will remain in the guiding piece between the brewing warehouse and the coffee liquid outlet. The residual coffee fluid cannot be discharged from the beverage outlet by the equipment or cannot flow back to the brewing chamber. When the interval of the next brewing cycle is too long, the temperature of the residual coffee liquid will drop, the flavor will be lost or will even deteriorate. The next time a beverage is brewed, the residual coffee liquid and fresh coffee liquid will be discharged together into the cup, which will cause the temperature and quality of the entire cup of coffee to fail to meet the requirements and result in a decline in the quality of the coffee liquid, thereby affecting the user experience.

The conventional solution is to increase the waiting time for brewing the next beverage until the coffee liquid in the guiding piece is evaporated, so that the impact of the residual coffee liquid on the beverage can be minimized. However, this conventional solution will affect the beverage preparation efficiency. Or, in the conventional solution, the guiding piece is flushed to remove the coffee liquid residual in the guiding piece, but there is still flushing water in the guiding piece after flushing, which will still affect the quality of the beverage, increase redundant operations, and reduce the beverage preparation efficiency.

Based on the above technical problems, embodiments of the present application provide an anti-residue device, a beverage preparation method and an electrical equipment, to avoid the technical problem that the residual fluid in the guiding piece between the brewing chamber and the beverage outlet will remain for a long time, resulting in a decline in fluid quality and affecting the user experience.

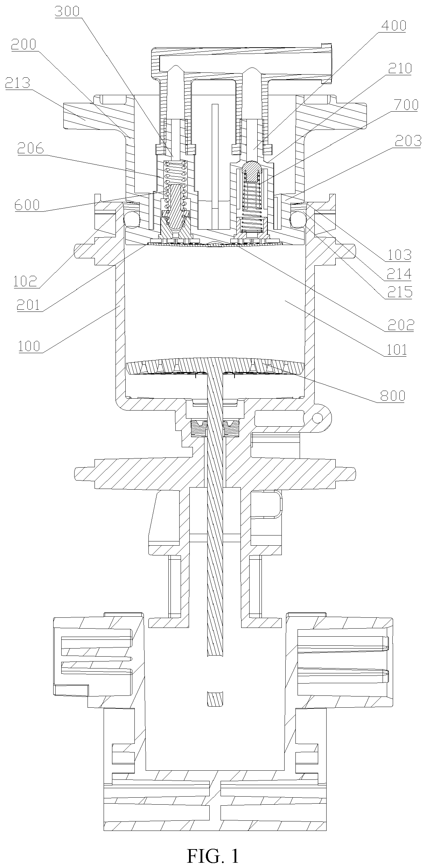

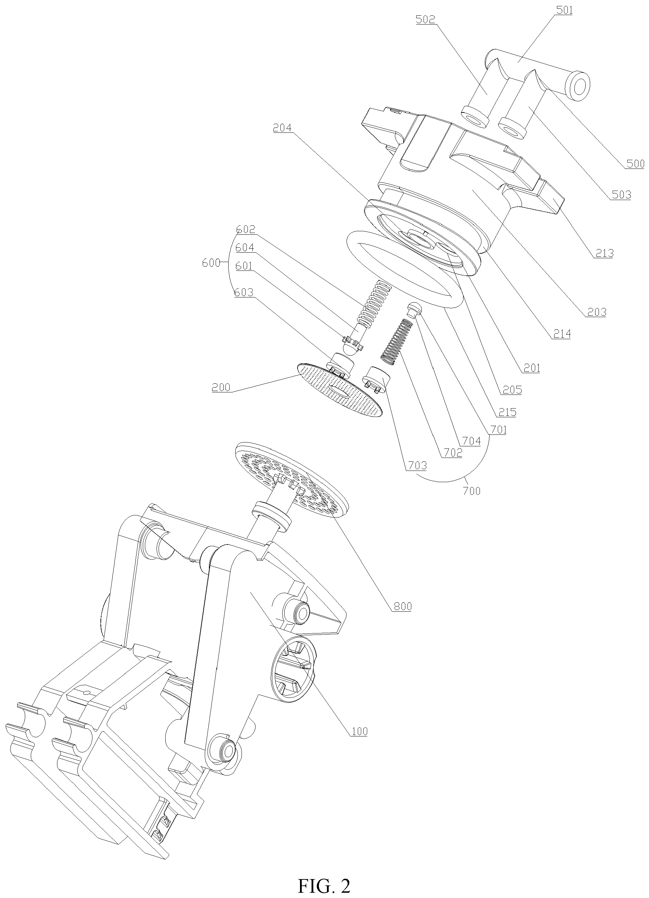

FIG. 1 is a schematic cross-sectional view of an anti-residue device according to one or more embodiments of the present application. FIG. 2 is an explosion view of FIG. 1. With reference to FIG. 1 and FIG. 2, the anti-residue device includes a brewing warehouse 100, a brewing piece 200 and a guiding piece 500 for transporting fluid. The brewing warehouse 100 is provided with a brewing chamber 101, and the brewing chamber 101 is provided with a brewing port 102. The brewing piece 200 movably passes through the brewing port 102, and the brewing piece 200 can move back and forth relative to the brewing warehouse 100. The brewing piece 200 is provided with a first guiding channel 300 and a second guiding channel 400. One end of the first guiding channel 300 communicates with the brewing chamber 101. One end of the second guiding channel 400 communicates with the brewing chamber 101. The other end of the first guiding channel 300 communicates with the guiding piece 500, and the other end of the second guiding channel 400 communicates with the guiding piece 500. When the brewing piece 200 and the brewing warehouse 100 move towards each other, the first guiding channel 300 is opened and the second guiding channel 400 is closed, to guide the fluid in the brewing warehouse 100 out via the first guiding channel 300. When the brewing piece 200 and the brewing warehouse 100 move away from each other, the first guiding channel 300 is closed and the second guiding channel 400 is opened, to guide the fluid in the first guiding channel 300 to the brewing warehouse 100 via an open second guiding channel 400, then the fluid is discharged via the brewing port 102.

In practical use of the anti-residue device in the embodiments of the present application, after the fluid in the brewing warehouse 100 is brewed, the brewing piece 200 and the brewing warehouse 100 are controlled to move towards each other, the first guiding channel 300 is opened, and the second guiding channel 400 is closed. The fluid in the brewing warehouse 100 is guided to the corresponding equipment via the first guiding channel 300 and the guiding piece 500, to prepare the beverage. After the fluid in the brewing warehouse 100 is guided out by a set amount, the brewing piece 200 and the brewing warehouse 100 are controlled to move away from each other, and a negative pressure is formed in the brewing warehouse 100. In this case, the first guiding channel 300 is closed, and the second guiding channel 400 is opened, to guide the fluid in the first guiding channel 300 and the guiding piece 500 to the brewing warehouse 100 via the opened second guiding channel 400. Then the fluid will be discharged via the brewing port 102 of the brewing warehouse 100, so that the residual fluid in the guiding piece 500 can be discharged from the brewing warehouse 100, to avoid a decline in fluid quality due to long-term retention of the fluid, thereby improving user experience.

A shown in FIG. 1 and FIG. 2, the brewing port 102 can be provided at the top of the brewing chamber 101 of the brewing warehouse 100. The brewing piece 200 and the brewing warehouse 100 can be controlled to move away from each other by some external driving mechanisms. Until the brewing piece 200 is completely separated from the brewing warehouse 100, the brewing port 102 is open, and then the brewing material required for preparing the beverage can be injected into the brewing chamber 101 of the brewing warehouse 100 via the opened brewing port 102. After the brewing material is injected, the brewing piece 200 and the brewing warehouse 100 are driven to move towards each other, then the brewing port 102 can be closed to carry out fluid brewing preparation.

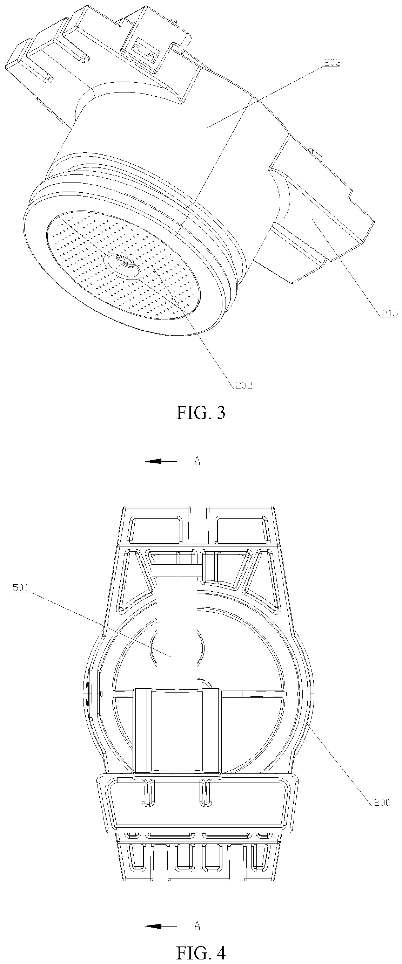

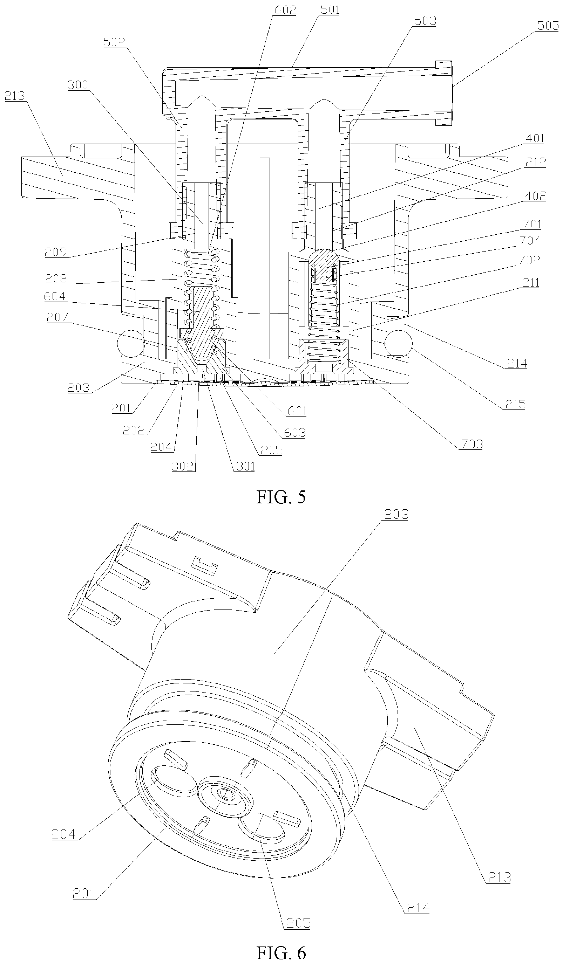

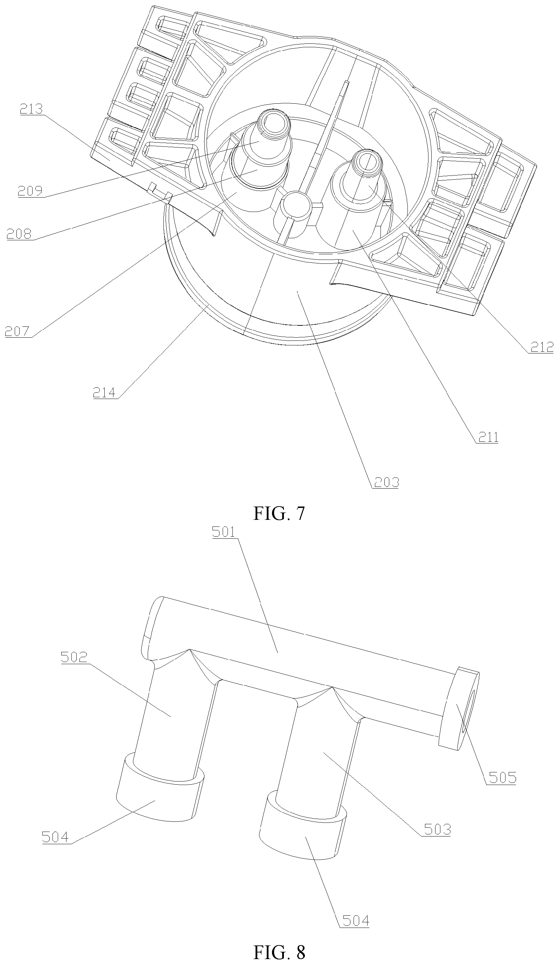

FIG. 3 is a schematic structural view of a brewing piece in FIG. 1. FIG. 4 is a top view of FIG. 3. FIG. 5 is a schematic cross-sectional view of FIG. 3 along line A-A. FIG. 6 is a schematic structural view of a base in FIG. 3. FIG. 7 is a schematic structural view of FIG. 6 from another perspective. As shown in FIG. 1 to FIG. 7, the overall shape of the brewing piece 200 is shaped in a column that matches with the brewing chamber 101. A sealing piece 215 is provided between the peripheral surface of the brewing piece 200 and the side wall of the brewing chamber 101 to ensure the sealing effect between the brewing piece 200 and the brewing chamber 101 when the brewing piece 200 is located in the brewing chamber 101, thereby preventing fluid from overflowing from the gap between the brewing piece 200 and the brewing chamber 101.

As shown in FIG. 1 to FIG. 6, since the brewing piece 200 moves back and forth, an annular groove 214 can be provided at the peripheral surface of the brewing piece 200 according to an embodiment of the present application. The sealing piece 215 is provided at the annular groove 214, and the sealing piece 215 is provided with a sealing portion protruding from the annular groove 214. When the brewing piece 200 moves back and forth relative to the brewing warehouse 100, the sealing portion of the sealing piece 215 will be compressed, thereby ensuring the sealing effect between the brewing piece 200 and the brewing chamber 101.

As shown in FIG. 1 to FIG. 6, the top of the brewing piece 200 is provided with a filter port 201, and fluid can enter and exit via the filter port 201. A filter mesh 202 can be provided at the filter port 201 to improve the extraction effect of the fluid.

As shown in FIG. 6, the top of the brewing piece 200 can be provided with a base 203. The above-mentioned filter port 201 is provided at the end face of the base 203 facing the brewing warehouse 100. The filter mesh 202 is installed at the base 203. The base 203 may be provided with a first through hole 204 that communicates with the first guiding channel 300 and a second through hole 205 that communicates with the first guiding channel 300, to achieve transportation and circulation of the fluid.

As shown in FIG. 1 to FIG. 7, an overlapping platform 213 can be provided at the outer peripheral surface of the base 203. When the brewing piece 200 moves towards the brewing warehouse 100, the overlapping platform 213 will abut against the top of the brewing warehouse 100, to limit the moving of the brewing piece 200 and improve the operation safety of the device.

As shown in FIG. 1, FIG. 2 and FIG. 5, a first switching piece 600 is provided at the first guiding channel 300 to control the first guiding channel 300 to be open or closed. The first switching piece 600 includes a first valve core 601 and a first elastic piece 602. The first valve core 601 is movably provided in the first guiding channel 300. The head portion of the first valve core 601 faces the brewing warehouse 100. The head portion of the first valve core 601 blocks the first guiding channel 300. The body of the first valve core 601 is provided in the first guiding channel 300 in a clearance fit, and the projection of the head portion of the first valve core 601 falls on the body of the first valve core 601. Both ends of the first elastic piece 602 are connected to the tail portion of the first valve core 601 and the inner wall of the first guiding channel 300 respectively. When the brewing piece 200 and the brewing warehouse 100 move towards each other, the fluid in the brewing warehouse 100 is compressed and will flow into the first guiding channel 300, which will act on the head portion of the first valve core 601 to force the first elastic piece 602 to be compressed, so that the fluid can flow out via the gap between the body of the first valve core 601 and the first guiding channel 300 to open the first guiding channel 300. On the contrary, when the brewing piece 200 and the brewing warehouse 100 move away from each other, due to the negative pressure generated in the brewing warehouse 100, the first elastic piece 602 is forced to drive the first valve core 601 to return to close the first guiding channel 300.

As shown in FIG. 1, FIG. 2 and FIG. 5, the first guiding channel 300 includes a first liquid inlet channel 301 and a first liquid diffusion channel 302 provided along the movement direction of the brewing piece 200. The brewing chamber 101, the first liquid inlet channel 301 and the first liquid diffusion channel 302 communicate with each other in sequence. The cross-sectional area of the first liquid diffusion channel 302 gradually increases along the direction away from the brewing chamber 101. The head portion of the first valve core 601 is movably provided in the first liquid diffusion channel 302. In the initial state, supported by the first elastic piece 602, the head portion of the first valve core 601 is provided in the first liquid diffusion channel 302 to close the first guiding channel 300. When the brewing piece 200 and the brewing warehouse 100 moves towards each other, the fluid in the brewing warehouse 100 is compressed and will flow into the first liquid inlet channel 301 of the first valve seat 603 via the first through hole 204. The head portion of the first valve core 601 in the first liquid diffusion channel 302 is forced to move away from the brewing warehouse 100. Since the cross-sectional area of the first liquid diffusion channel 302 gradually increases along the direction away from the brewing chamber 101, the fluid will flow into the position between the head portion of the first valve core 601 and the first liquid diffusion channel 302, and then will flow out via the gap between the body of the first valve core 601 and the first guiding channel 300.

As shown in FIG. 1, FIG. 2 and FIG. 5, the first switching piece 600 also includes a first valve seat 603. The first liquid inlet channel 301 and the first liquid diffusion channel 302 are provided at the first valve seat 603 along the movement direction of the brewing piece 200. The brewing chamber 101 can communicate with the first liquid inlet channel 301 and the first liquid diffusion channel 302 in sequence via the first through hole 204, to realize fluid transportation.

In an embodiment, as shown in FIG. 1, FIG. 2, FIG. 5 and FIG. 7, a first guiding column 206 can be provided at the top of the base 203, and the first guiding column 206 can penetrate along the axial direction to form a first guiding channel 300. The section of the first guiding channel 300 close to the brewing warehouse 100 can be set as the first guiding section 207, the section in the middle of the first guiding channel 300 can be set as the second guiding section 208, and the section of the first guiding channel 300 far away from the brewing warehouse 100 can be set as the third guiding section 209. The first guiding section 207, the second guiding section 208 and the third guiding section 209 share a same axis, and communicate with each other in sequence. The diameters of the first guiding section 207, the second guiding section 208 and the third guiding section 209 decrease successively. The first valve seat 603 is fixed at the bottom of the first guiding section 207. There is a distance between the first valve seat 603 and the top of the first guiding section 207. The head portion of the first valve core 601 can be shaped in an arc, and the body of the first valve core 601 is in clearance fit with the first guiding section 207. A first positioning column 604 can be provided at the tail portion of the first valve core 601. The first positioning column 604 movably passes through the first guiding section 207, then enters the second guiding section 208. The first elastic piece 602 can be a spring, and both ends of the first elastic piece 602 are connected to or abutted against the tail portion of the first valve core 601 and the top of the second guiding section 208 respectively. The first elastic piece 602 is sleeved outside the first positioning column 604 to guide the compression and reset of the first elastic piece 602. The fluid in the brewing warehouse 100 can pass through the first guiding section 207, the second guiding section 208 and the third guiding section 209 in sequence, and then flows out.

In other embodiments, the head portion of the first valve core 601 may also be shaped in a circular cone or a circular truncated cone, which is not limited here. In addition, the outer diameter of the third guiding section 209 can be smaller than the outer diameter of the second guiding section 208, which can facilitate the assembly of the first elastic piece 602 and the guiding piece 500. Regarding the assembly of the guiding piece 500, please refer to the following description.

As shown in FIG. 1, FIG. 2 and FIG. 5, a second switching piece 700 is provided in the second guiding channel 400 to control the second guiding channel 400 to be open or closed. The second switching piece 700 includes a second valve core 701 and a second elastic piece 702. The second valve core 701 is movably provided in the second guiding channel 400, and the head portion of the second valve core 701 departs away from the brewing warehouse 100. The head portion of the second valve core 701 blocks the second guiding channel 400, and the body of the second valve core 701 is provided in the second guiding channel 400 in a clearance fit. The projection of the head portion of the second valve core 701 falls on the body of the second valve core 701. Both ends of the second elastic piece 702 are connected to the tail portion of the second valve core 701 and the inner wall of the second guiding channel 400 respectively. Under the condition that the brewing piece 200 and the brewing warehouse 100 move away from each other, the fluid in the brewing warehouse 100 is compressed and will flow into the second guiding channel 400, which will act on the tail portion of the second valve core 701. The head portion of the second valve core 701 blocks the second guiding channel 400, so that the fluid can only flow out via the first guiding channel 300, and at the same time, the second elastic piece 702 is forced to extend to close the second guiding channel 400. On the contrary, under the condition that the brewing piece 200 and the brewing warehouse 100 move towards each other, due to the negative pressure generated in the brewing warehouse 100, the second elastic piece 702 is forced to return, and the second elastic piece 702 drives the second valve core 701 to move to open the second guiding channel 400 and guide the fluid in the guiding piece 500 into the brewing warehouse 100 via the opened second guiding channel 400, and then the fluid will be discharged via the brewing port 102 of the brewing warehouse 100.

As shown in FIG. 1, FIG. 2 and FIG. 5, the second guiding piece 500 includes a second liquid inlet channel 401 and a second liquid diffusion channel 402 that are sequentially provided along the movement direction of the brewing piece 200. The second liquid inlet channel 401, the second liquid diffusion channel 402 sequentially communicate with the brewing chamber 101 via the second through hole 205. The cross-sectional area of the second liquid diffusion channel 402 gradually increases along the direction towards the brewing chamber 101. The head portion of the second valve core 701 is movably provided in the second liquid diffusion channel 402. Under the condition that the brewing piece 200 and the brewing warehouse 100 move towards each other, the fluid in the brewing warehouse 100 is compressed and will flow into the second guiding channel 400, which will act on the tail portion of the second valve core 701. The head portion of the second valve core 701 is provided in the first liquid diffusion channel 302 to block the second guiding channel 400, so that the fluid can only flow out via the first guiding channel 300. At the same time, the second elastic piece 702 is forced to extend to close the second guiding channel 400. On the contrary, under the condition that the brewing piece 200 and the brewing warehouse 100 move away from each other, due to the negative pressure generated in the brewing warehouse 100, the second elastic piece 702 is forced to return, and the second elastic piece 702 drives the second valve core 701 in the second liquid diffusion channel 402 to move along the direction towards the brewing warehouse 100, to open the second guiding channel 400. In this case, the fluid in the guiding piece 500 can be guided to the brewing warehouse 100 via the opened second guiding channel 400, and can be discharged via the brewing port 102 of the brewing warehouse 100.

In an embodiment, as shown in FIG. 1, FIG. 2, FIG. 5 and FIG. 7, a second guiding column 210 can be provided at the top of the base 203, and the second guiding column 210 can penetrate along the axial direction to form a second guiding channel 400. The section of the second guiding channel 400 close to the brewing warehouse 100 can be set as the fourth guiding section 211, and the section of the second guiding channel 400 far away from the brewing warehouse 100 can be set as the fifth guiding section 212. The fourth guiding section 211 and the fifth guiding section 212 share the same axis and communicate with each other in sequence. The diameters of the fourth guiding section 211 and the fifth guiding section 212 gradually increase. A second valve seat 703 can be provided at the bottom of the fourth guiding section 211. There is a distance between the second valve seat 703 and the top of the fourth guiding section 211, and the second valve seat 703 is provided with a third through hole. The brewing chamber 101 communicates with the fourth guiding section 211 via the second through hole 205 and the third through hole. The third through hole is a stepped hole, and the bottom of the second elastic piece 702 is connected to the stepped hole. The top of the second elastic piece 702 is connected to the tail portion of the second valve core 701, and the fifth guiding section 212 can be the above-mentioned second liquid inlet channel 401. The second liquid diffusion channel 402 is provided at the transition position between the fifth guiding section 212 and the fourth guiding section 211. The head portion of the second valve core 701 can be shaped in an arc. The body of the second valve core 701 is in a clearance fit with the fourth guiding section 211. A second positioning column 704 can be provided at the tail portion of the second valve core 701. The second positioning column 704 is movably provided in the fourth guiding section 211. The elastic piece 702 can be a spring. The second elastic piece 702 is sleeved outside the second positioning column 704 to guide the compression and reset of the second elastic piece 702. The fluid in the guiding piece 500 can pass through the fifth guiding section 212, the fourth guiding section 211, the third through hole and the second through hole 205, and then will flow into the brewing warehouse 100.

In other embodiments, the head portion of the first valve core 601 may also be shaped in a circular cone or a circular truncated cone, which is not limited here. In addition, the outer diameter of the fifth guiding section 212 can be smaller than the outer diameter of the fourth guiding section 211, which can facilitate the assembly of the guiding piece 500. Regarding the assembly of the guiding piece 500, please refer to the following description.

As can be seen from the above, both the first switching piece 600 and the second switching piece 700 are pressure control valves, that is, valves controlled by pressure. In other embodiments, the first switching piece and the second switching piece may also be other types of valves. For example, the periphery of the switching piece has a certain elasticity. Under the action of pressure, the switching piece is completely deformed, thereby allowing the channel to open.

As shown in FIG. 1, FIG. 2 and FIG. 5, the anti-residue device also includes a guiding piece 500. FIG. 8 is a schematic structural view of a guiding piece in FIG. 3. As shown in FIG. 1, FIG. 2, FIG. 5 and FIG. 8, the guiding piece 500 includes a main pipe 501, a first branch pipe 502 and a second branch pipe 503. The main pipe 501 is provided with a liquid inlet 505. The first branch pipe 502 and the second branch pipe 503 are connected in parallel to the main pipe 501. The first branch pipe 502 communicates with the first guiding channel 300, and the second branch pipe 503 communicates with the second guiding channel 400. In actual implementation, after the fluid in the brewing warehouse 100 is brewed, the brewing piece 200 is controlled to move towards the brewing warehouse 100, to control the first guiding channel 300 to open and the second guiding channel 400 to close. The fluid in the brewing warehouse 100 is guided into the main pipe 501 via the first guiding channel 300 and the first branch pipe 502, and is guided to the corresponding equipment via the liquid inlet 505 of the main pipe 501 for preparing the beverage. After the fluid in the brewing warehouse 100 is prepared for a certain amount, the brewing piece 200 is controlled to move away from the brewing warehouse 100, and a negative pressure is formed in the brewing warehouse 100. The first guiding channel 300 is controlled to be closed, and the second guiding channel 400 is controlled to be open, to guide the fluid in the main pipe 501 and the first guiding channel 300 to the brewing warehouse 100 via the second branch pipe 503 and the opened second guiding channel 400. Then the fluid is discharged via the brewing port 102 of the brewing warehouse 100. In this way, the residual fluid in the guiding piece 500 can be discharged from the brewing warehouse 100, to avoid the problem of fluid quality deterioration due to long-term retention of the residual fluid, thereby improving user experience.

In an embodiment of the present application, the first branch pipe 502 and the second branch pipe 503 can be integrally formed with the main pipe 501. The first branch pipe 502 is connected to the third guiding section 209 of the first guiding column 206 through the joint 504. The second branch pipe 503 is connected to the fourth guiding section 211 of the second guiding column 210 through another joint 504. In other embodiments, the first branch pipe 502 can be fixed to the outer peripheral surface of the third guiding section 209 of the first guiding column 206 through threads, and the second branch pipe 503 can be fixed to the outer peripheral surface of the fourth guiding section 211 of the second guiding column 210 through threads. Then the main pipe 501 is plugged into the first branch pipe 502 and the second branch pipe 503, which is not limited here.

In the related art, the brewing port 102 will be provided at the bottom of the brewing warehouse 100 for discharging the residual fluid. However, when the fluid is brewed in the brewing warehouse 100, the brewing port 102 needs to be closed. Therefore, a device used to control the opening and closing of the brewing port 102 should be provided to adapt to different operating conditions, which results in an increase in cost.

Based on this, as shown in FIG. 1 and FIG. 2, the anti-residue device of the embodiment of the present application also includes a piston piece 800, and the piston piece 800 can be driven by an external force to move back and forth in the brewing chamber 101, so as to receive the residual fluid.

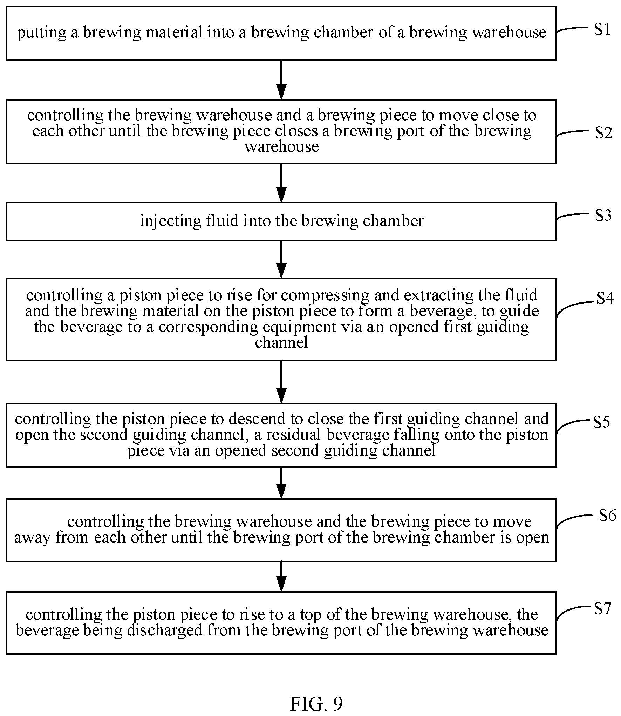

FIG. 9 is a schematic flow chart of a beverage preparation method based on the anti-residue device. The beverage preparation method includes following steps.

S1, putting a brewing material into a brewing chamber 101 of a brewing warehouse 100. Under the condition that the brewing warehouse 100 and the brewing piece 200 are completely separated, the brewing port 102 on the top of the brewing warehouse 100 is open, and the brewing material is putted into the brewing chamber 101 of the brewing warehouse 100 via the opened brewing port 102. The brewing material can be coffee beans and the like, and the brewing material will fall into the top of the piston piece 800.

S2, controlling the brewing warehouse 100 and the brewing piece 200 to move towards each other until the brewing piece 200 closes a brewing port 102 of the brewing warehouse 100. During actual implementation, the brewing warehouse 100 can be controlled to move towards the brewing piece 200, or the brewing piece 200 can be controlled to move towards the brewing warehouse 100, or both the brewing warehouse 100 and the brewing piece 200 can be controlled to move, so that the brewing warehouse 100 and the brewing piece 200 can move towards each other.

S3, injecting fluid into the brewing chamber 102. Since the brewing warehouse 100 and the brewing piece 200 move towards each other, the air in the brewing warehouse 100 is compressed, and the first guiding channel 300 is at least partially open. In this case, the fluid can be injected into the brewing warehouse 100 via the guiding piece 500. In other embodiments, a special transportation pipe may be provided to inject fluid into the brewing warehouse 100, which is not limited here.

S4, controlling a piston piece to rise for compressing the fluid and brewing material on the piston piece 800 to form a beverage, and opening the first guiding channel 300 to guide the beverage to a corresponding equipment via an opened first guiding channel 300.

S5, controlling the piston piece 800 to descend. The piston piece 800 can descend to the bottom of the brewing warehouse 100 to generate a negative pressure in the brewing warehouse 100 to close the first guiding channel 300 and open the second guiding channel 400. The residual beverage falls onto the piston piece 800 via the opened second guiding channel 400.

S6, controlling the brewing warehouse 100 and the brewing piece 200 to move away from each other until the brewing port 102 of the brewing warehouse 100 is open. During actual implementation, the brewing warehouse 100 can be controlled to move away from the brewing piece 200, or the brewing piece 200 can be controlled to move away from the brewing warehouse 100, or both the brewing warehouse 100 and the brewing piece 200 can be controlled to move, so that the brewing warehouse 100 and the brewing piece 200 move away from each other.

S7, controlling the piston piece 800 to rise to a top of the brewing warehouse 100. The fluid is discharged from the brewing port 102 of the brewing chamber 100.

In the above solution, the rise of the piston piece 800 can also extract the fluid to generate a beverage, and the discharge port of the residue as well as the device for controlling the opening and closing of the discharge port of the residue will not be used, which may reduce costs and has good practicability.

On the other hand, embodiments of the present application further provide an electrical equipment, which includes the above-mentioned anti-residue device.

The electrical equipment with the above-mentioned anti-residue device can discharge the residual fluid in the guiding piece 500 out of the brewing warehouse 100, so that the residual fluid can be recycled in time, which can avoid the fluid whose temperature drops in the next brewing cycle from being mixed into the fresh fluid, and ensure fresh fluid temperature and fluid flavor, that is, avoid the problem of fluid quality deterioration due to long-term retention of fluid, thereby improving user experience.

The electrical equipment can be the above-mentioned automatic coffee machine, or other types of beverage equipment, such as various types of beverage equipment, etc., which are not limited here.

The specific operation is that, a control panel can be provided at the electrical equipment. The control panel can be provided with instructions corresponding to the above-mentioned anti-residue mode. When the user presses or contacts the instructions corresponding to the control panel, the anti-residue mode of the electrical equipment can be operated. Or, a sensor can be provided in the electrical equipment, and the user can control various instructions through remote control or other means to realize the operation of the electrical equipment in the anti-residue mode, which will not be limited by embodiments of the present application.

In the present application, unless otherwise clearly specified and limited, the terms "connected", "fixed", etc. should be interpreted broadly. For example, "fixed" can be a fixed connection, a detachable connection, or a whole; can be a mechanical connection or an electrical connection; may be directly connected, or indirectly connected through an intermediate medium, and may be the internal communication between two elements or the interaction relationship between two elements, unless specifically defined otherwise. For those of ordinary skill in the art, the specific meaning of the above-mentioned terms in the present application can be understood according to specific circumstances.

In the present application, it should be understood that the terms "center", "longitudinal", "lateral", "length", "width", "thickness", "upper", "lower", "front", "back", "left", "right", "vertical", "horizontal", "top", "bottom", "inside", "outside", "clockwise", "counterclockwise" and other terms that indicate the orientation or positional relationship is based on the orientation or positional relationship shown in the drawings, which is only for the convenience of describing the present application and simplifying the description, and does not indicate or imply that the referred device or element must have a specific orientation, or be constructed and operated in a specific orientation, and therefore cannot be construed as a limitation on the present application.

Besides, the descriptions associated with, e.g., "first" and "second," in the present application are merely for descriptive purposes, and cannot be understood as indicating or suggesting relative importance or impliedly indicating the number of the indicated technical feature. Therefore, the feature associated with "first" or "second" can expressly or impliedly include at least one such feature. In addition, the technical solutions of the various embodiments can be combined with each other, but the combinations must be based on the realization of those skilled in the art. When the combination of technical solutions is contradictory or cannot be achieved, it should be considered that such a combination of technical solutions does not exist, nor does it fall within the scope of the present application.

In the present application, unless otherwise clearly specified and limited, the first feature "on" or "below" the second feature may mean direct contact between the first and second features, or may mean that the first and second features are not in direct contact, but are in contact through another feature between them. Furthermore, the first feature "on", or "above", or "over" the second feature may mean that the first feature is directly above and diagonally above the second feature, or may simply mean that the first feature is higher in level than the second feature. The first feature "below", or "under", or "beneath" the second feature may mean that the first feature is lower in level than the second feature.

In the present application, the terms "one embodiment", "some embodiments", "examples", "specific examples", or "some examples" or the like means that a particular feature, structure, material, or characteristic described in connection with the embodiment or example includes in at least one embodiment or example of the present application. In this specification, the schematic expressions of the above terms are not necessarily directed to the same embodiment or example. Furthermore, the described specific features, structures, materials or characteristics may be combined in any suitable manner in any one or more embodiments or examples. Furthermore, those skilled in the art may combine the different embodiments or examples in the present specification.

Although embodiments of the present application have been described, additional changes and modifications to these embodiments may be made by those skilled in the art once the basic inventive concepts are understood. Therefore, the appended claims are intended to include the embodiments and all changes and modifications that fall within the scope of the present application.

Obviously, those skilled in the art can make various changes and modifications to the present application without departing from the scope of the present application. In this way, if these changes and modifications of the present application fall within the scope of the claims of the present application and equivalent technologies, the present application is also intended to include these changes and modifications.

## Claims

1. An anti-residue device, **characterized by**:
a brewing warehouse (100) provided with a brewing chamber (101), the brewing chamber (101) being provided with a brewing port (102);
a brewing piece (200) movably passing through the brewing port (102), wherein the brewing piece (200) moves back and forth relative to the brewing warehouse (100), the brewing piece (200) is provided with a first guiding channel (300) and a second guiding channel (400), and both the first guiding channel (300) and the second guiding channel (400) communicate with the brewing chamber (101); and
a guiding piece (500) communicating with the first guiding channel (300) and the second guiding channel (400) to transport fluid,
wherein:
when the brewing piece (200) and the brewing warehouse (100) move towards each other, the first guiding channel (300) is opened and the second guiding channel (400) is closed, to guide fluid in the brewing warehouse (100) to the guiding piece (500) via the first guiding channel (300), and
when the brewing piece (200) and the brewing warehouse (100) move away from each other, the first guiding channel (300) is closed and the second guiding channel (400) is opened, to guide residual fluid in the first guiding channel (300) and the guiding piece (500) to the brewing warehouse (100) via the opened second guiding channel (400), and the residual fluid is discharged via the brewing port (102).

2. The anti-residue device of claim 1, wherein:
a first switching piece (600) is provided in the first guiding channel (300) to control the first guiding channel (300) to be opened and closed;
a second switching piece (700) is provided in the second guiding channel (400) to control the second guiding channel (400) to be opened and closed; and
both the first switching piece (600) and the second switching piece (700) are pressure control valves.

3. The anti-residue device of claim 2, wherein:
the first switching piece (600) comprises a first valve core (601) and a first elastic piece (602), and the first valve core (601) is movably provided in the first guiding channel (300);
a head portion of the first valve core (601) is directed towards the brewing warehouse (100) and blocks the first guiding channel (300), a body of the first valve core (601) is provided in the first guiding channel (300) in a clearance fit, and a projection of the head portion of the first valve core (601) falls on the body of the first valve core (601); and
two ends of the first elastic piece (602) are respectively connected to a tail portion of the first valve core (601) and an inner wall of the first guiding channel (300).

4. The anti-residue device of claim 3, wherein:
the first guiding channel (300) comprises a first liquid inlet channel (301) and a first liquid diffusion channel (302) provided along a movement direction of the brewing piece (200);
the brewing chamber (101), the first liquid inlet channel (301), and the first liquid diffusion channel (302) communicate with each other in sequence;
a cross-sectional area of the first liquid diffusion channel (302) gradually increases along a direction away from the brewing chamber (101); and
the head portion of the first valve core (601) is movably provided in the first liquid diffusion channel (302).

5. The anti-residue device of any one of claims 2 to 4, wherein:
the second switching piece (700) comprises a second valve core (701) and a second elastic piece (702), and the second valve core (701) is movably provided in the second guiding channel (400);
a head portion of the second valve core (701) is directed away from the brewing warehouse (100) and blocks the second guiding channel (400);
a body of the second valve core (701) is provided in the second guiding channel (400) in a clearance fit, and a projection of the head portion of the second valve core (701) falls on the body of the second valve core (701); and
two ends of the second elastic piece (702) are respectively connected to a tail portion of the second valve core (701) and an inner wall of the second guiding channel (400).

6. The anti-residue device of claim 5, wherein:
the second guiding channel (400) comprises a second liquid inlet channel (401) and a second liquid diffusion channel (402) provided along a movement direction of the brewing piece (200);
the second liquid inlet channel (401), the second liquid diffusion channel (402) and the brewing chamber (101) communicates with each other in sequence;
a cross-sectional area of the second liquid diffusion channel (402) gradually increases in a direction towards the brewing chamber (101); and
the head portion of the second valve core (701) is movably provided in the second liquid diffusion channel (402).

7. The anti-residue device of any one of claims 1 to 6, wherein:
the guiding piece (500) comprises a main pipe (501), a first branch pipe (502), and a second branch pipe (503);
the main pipe (501) is provided with a liquid inlet (505);
the first branch pipe (502) and the second branch pipe (503) are connected in parallel to the main pipe (501); and
the first branch pipe (502) communicates with the first guiding channel (300), and the second branch pipe (503) communicates with the second guiding channel (400).

8. The anti-residue device of any one of claims 1 to 6, wherein a head portion of the brewing piece (200) is provided with a filter port (201), and a filter mesh (202) is provided at the filter port (201).

9. The anti-residue device of any one of claims 1 6, further comprising a piston piece (800) movable back and forth in the brewing chamber (101), to receive the residual fluid in the first guiding channel (300) and the guiding piece (500) and guide the residual fluid to the brewing port (102) for discharging.

10. A beverage preparation method, wherein the beverage preparation method is based on the anti-residue device of claim 9, and the beverage preparation method comprises:
(S 1), putting a brewing material into the brewing chamber of the brewing warehouse;
(S2), controlling the brewing warehouse and the brewing piece to move towards each other until the brewing piece covers the brewing port of the brewing warehouse;
(S3), injecting fluid into the brewing chamber;
(S4), controlling the piston piece to rise for compressing and extracting the fluid and the brewing material on the piston piece to form a beverage, and opening the first guiding channel to guide the beverage to a corresponding equipment via the opened first guiding channel;
(S5), controlling the piston piece to descend to generate a negative pressure in the brewing warehouse to close the first guiding channel and open the second guiding channel, wherein a residual beverage falls onto the piston piece via the opened second guiding channel;
(S6), controlling the brewing warehouse and the brewing piece to move away from each other until the brewing port of the brewing chamber is opened; and
(S7), controlling the piston piece to rise to a top of the brewing warehouse, wherein the beverage is discharged from the brewing port of the brewing chamber.

11. The beverage preparation method of claim 10, wherein the (S2), controlling the brewing warehouse and the brewing piece to move towards each other comprises:
controlling the brewing warehouse to move towards the brewing piece, and/or controlling the brewing piece to move towards the brewing warehouse.

12. The beverage preparation method of claim 10, wherein the (S6), controlling the brewing warehouse and the brewing piece to move away from each other comprises:
controlling the brewing warehouse to move away from the brewing piece, and/or controlling the brewing piece to move away from the brewing warehouse.

13. An electrical equipment, comprising the anti-residue device of any one of claims 1 to 9.

14. The electrical equipment of claim 13, wherein the electrical equipment is an automatic coffee machine.
